# EUROPÄISCHE PATENTSCHRIFT

(11) **EP 3 454 457 B1**
(45) Veröffentlichungstag und Bekanntmachung des Hinweises auf die Patenterteilung: **07.10.2020**
(21) Anmeldenummer: 18178552.8
(22) Anmeldetag: 19.06.2018
(51) Int. Cl.: H02K 1/20, H02K 1/18, H02K 5/04, H02K 9/08, H02K 9/19, H02K 9/197

(54) **ELEKTROMOTOR MIT MINDESTENS EINEM KÜHLMITTELKANAL**
ELECTRIC MOTOR HAVING AT LEAST ONE COOLING CHANNEL
MOTEUR ÉLECTRIQUE DOTÉ D'AU MOINS UN CANAL DE REFROIDISSEMENT

(30) Priorität: 12.09.2017 DE 102017216066
(43) Veröffentlichungstag der Anmeldung: 13.03.2019
(73) Patentinhaber: AUDI AG, 85045 Ingolstadt (DE)
(72) Erfinder: Rehr, Alfred, 85120 Hepberg (DE); Schobeß, Nico, 85080 Gaimersheim (DE); Caramigeas, Thierry, 85055 Ingolstadt (DE)

(56) Entgegenhaltungen:
- WO-A1-2016/132060
- DE-A1-102012 022 452
- US-A- 5 331 238
- US-A1- 2010 176 668
- US-A1- 2014 042 841
- US-A1- 2014 117 798

## Beschreibung

Die vorliegende Erfindung betrifft einen Elektromotor, insbesondere einen Innenläufermotor mit einem aus Lamellen aufgebauten Stator und mit einem konzentrisch im Stator angeordneten Rotor, mit einem den Stator umfangsseitig umschließenden Gehäuse und mit zwei Gehäusekappen zum axial beidseitigen Verschließen des Gehäuses und zum Aufnehmen und Führen einer Welle des Rotors, wobei die Lamellen jeweils mindestens drei umfangsseitig angeordnete Stege zum Ausbilden von mindestens einem Kühlmittelkanal zwischen dem Stator und dem Gehäuse aufweisen und wobei der mindestens eine Kühlmittelkanal durch die Gehäusekappen fluiddicht begrenzbar ist, und mindestens ein Steg mindestens einer Lamelle mindestens eine Nut zum Aufnehmen eines Dichtmittels aufweist, wobei mindestens ein Kühlmittelkanal zumindest bereichsweise mit dem Dichtmittel beschichtet ist.

Bei Elektromotoren mit feststehendem Stator besteht der Stator aus gestanzten Scheiben bzw. Lamellen, in deren innerem Bereich Aussparungen für Wicklungen angeordnet sind. Der Außenbereich ist dabei zylindrisch geformt. Die Lamellen werden axial aufeinander gestapelt, so dass ein zylindrischer Körper entsteht. Durch eine Wärmebehandlung verkleben die Scheiben und es entsteht eine fest verbundene Einheit. Die Abwärme des Elektromotors wird in der Regel über die Lamellen und das Gehäuse abgeführt. Dazu verfügt das Gehäuse meist über einen oder mehrere Kanäle, durch die eine Kühlflüssigkeit geleitet wird. Alternativ sind auch zweiteilige Lösungen verfügbar, bei denen ein zusätzlicher Kühlmantel zusammen mit dem Gehäuse den Kühlkanal bildet. Die Kühlflüssigkeit fließt durch den abgedichteten Kanal und kommt mit dem Stator nicht in Kontakt. Derartige Gehäuse mit integrierten Kühlkanälen sind jedoch aufwendig in der Herstellung und kostenintensiv. Durch den Einsatz eines zusätzlichen Kühlmantels kann die Herstellung der Teile vereinfacht werden, jedoch muss hierfür ein zusätzliches Bauteil auf dem Gehäuse angebracht werden. In beiden Fällen ist die Kühlflüssigkeit allerdings vom Stator durch Wände des Gehäuses bzw. der integrierten Kühlkanäle räumlich von der Wärmequelle getrennt. Diese räumliche Trennung ist insbesondere aufgrund der elektrischen Leitfähigkeit der Kühlflüssigkeit und aufgrund der mangelnden Abdichtung des Stators gegenüber dem Rotor notwendig.

DE 11 2014 001 277 T5 offenbart einen in einem Statorkern integrierten Mikrokanalwärmetauscher. Der Statorkern ist aus gestapelten Blechen aufgebaut, die an ihrem Außendurchmesser unterschiedliche Geometrien aufweisen, welche Kühlkanäle formen, durch die ein Kühlmittel fließt.

DE 10 2014 219 724 A1 offenbart eine elektrische Maschine mit einer Kühlung. Der Statorkern besteht dabei aus gestapelten Blechen und umfasst auf seinem Außendurchmesser Strukturen, welche Kühlkanäle formen, die von einem Kühlmittel durchflossen werden.

DE 10 2014 220 510 A1 offenbart ein Lamellenpaket eines Rotors oder Stators für eine elektrische Maschine sowie ein Verfahren zum Fertigen desselben. Das Statorpaket besteht aus gestapelten Blechen, welche Durchbrüche aufweisen, durch die Kühlkanäle geformt werden und die mit einem Kühlmittel durchströmt werden.

Aus US 2014/042841 A1 ist ein flüssigkeitsgekühlter Elektromotor mit radialem Luftspalt bekannt, der einen Stator, einen Rotor, eine Rotorwelle, zwei Endglocken, ein Gehäuse, ein Kühlmittelverteilersystem und einen Kühlmittelsumpf umfasst. Der Rotor weist mehrere axial gerichtete Schlitze auf, die sich in der Nähe seines Umfangs befinden. Das KühlmittelVerteilersystem lenkt einen ersten Teil des flüssigen Kühlmittels an einem Teil des Stators vorbei und einen zweiten Teil des flüssigen Kühlmittels durch die Rotorschlitze. Ein Teil oder das gesamte flüssige Kühlmittel wird von dem Kühlmittelsumpf aufgenommen, aus dem das Kühlmittel rezirkuliert werden kann.

US 5 331 238 A offenbart eine Kern- und Gehäuseanordnung für elektromagnetische Geräte. Ein Kern wird in einem Gehäuse gehalten, und ein Kühlfluid wird axial entlang einer Achse des Kerns zwischen dem Gehäuse und dem Kern zugeführt, um den Kern zu kühlen. Der Kern kann Kernlamellen aufweisen, die mit Kühlrippen versehen sind, und die Kernlamellen können in Bezug auf benachbarte Kernlamellen gedreht werden, so dass die Kühlrippen einen kaskadierten Kühlkanal für den Fluss des Kühlfluids bereitstellen.

Aus US 2010/176668 A1 geht ein Stator hervor, der einen zylindrischen Statorkern mit einer Vielzahl von Schlitzen aufweist, die in vorbestimmten Abständen in Umfangsrichtung vorgesehen sind und zu einer Innenumfangsfläche des Statorkerns hin offen sind; und eine Spule, die einen Spulenendabschnitt aufweist, der von einem axialen Ende des Statorkerns vorsteht.

WO 2016/132060 A1 betrifft eine elektrische Rotationsmaschine für ein Getriebe eines Hybridfahrzeugs, umfassend einen Stator mit einem Statorkörper und einen Verteilerkreis zur Aufnahme eines Kühlfluids zum Kühlen der Maschine, der ausgebildet ist, um das Fluid zum Inneren der Maschine zu verteilen, wobei sich der Verteilerkreislauf zumindest teilweise parallel zu einer Ebene erstreckt, die im Wesentlichen quer zu einer Drehachse der Maschine ist, und eine Öffnung aufweist, die den Durchtritt des Fluids aus dem Verteilerkreis in das Innere der Maschine ermöglicht, wobei die Öffnung so angeordnet ist, dass sie mindestens einem vollen Abschnitt der Seitenfläche des Statorkörpers zugewandt ist.

US 2014/117798 A1 offenbart einen Motor, der einen Statorkern mit mehreren Statorlamellen aufweist, die von dem Statorkern nach außen vorstehen. Eine Vielzahl von Statorkühlkanälen ist zwischen benachbarten Statorlamellen definiert. Ein Strömungsmischerring ist axial mit dem Statorkern ausgerichtet und durch einen axialen Spalt davon getrennt. Der Strömungsmischerring umfasst mehrere Ringlamellen, die von einer Innenfläche nach innen ragen, und mehrere Ringkühlkanäle, die zwischen den mehreren Ringlamellen definiert sind. Die mehreren Ringlamellen erstrecken sich von einer ersten Oberfläche über mindestens einen Abschnitt einer axialen Länge des Strömungsmischerrings.

DE 10 2012 022 452 A1 lehrt eine elektrische Maschine mit einem Rotor, der gegenüber einem Maschinengehäuse drehbar gelagert ist. Ein Kühlkanal einer Kühlanordnung ist in einem Bereich eines Außenumfangs eines Stators angeordnet, um ein Kühlfluid zu führen. Zwei Kühlkanäle, die miteinander verbunden sind, sind in Endbereichen angeordnet, um eine Mäanderanordnung zu bilden. Der Bereich des Außenumfangs des Stators ist mit der parallel geschalteten Mäanderanordnung mit einer Fluidversorgungsanlage verbunden.

Der Erfindung liegt die Aufgabe zugrunde, einen Elektromotor mit einer Statorkühlung zu schaffen, bei dem das Kühlmittel mit einfachen technischen Mitteln von stromführenden Komponenten des Elektromotors zuverlässig getrennt ist.

Ein Gegenstand der vorliegenden Erfindung ist ein Elektromotor, insbesondere ein Innenläufermotor, mit einem aus einer Vielzahl an axial aneinandergereihten Lamellen aufgebauten Stator, wobei der Stator in Richtung eines im Stator konzentrisch angeordneten Rotors angeordnete Statorzähne zum Aufnehmen von Statorwicklungen aufweist. Der Elektromotor weist ein den Stator radial umschließendes Gehäuse und zwei Gehäusekappen zum axial beidseitigen Verschließen des Gehäuses und zum Aufnehmen und Führen einer Welle des Rotors auf. Die Lamellen weisen jeweils mindestens drei umfangsseitig angeordnete Stege zum Ausbilden von mindestens einem Kühlmittelkanal zwischen dem Stator und dem Gehäuse auf, wobei der mindestens eine Kühlmittelkanal durch die Gehäusekappen fluiddicht begrenzbar ist und mindestens ein Steg mindestens einer Lamelle mindestens eine Nut zum Aufnehmen eines Dichtmittels aufweist. Erfindungsgemäß ist mindestens ein Kühlmittelkanal zumindest bereichsweise mit dem Dichtmittel beschichtet.

Durch die erfindungsgemäße Ausführung des Elektromotors kann zwischen dem Gehäuse oder alternativ einem Rohr, welches als Gehäuse dient, und dem Stator mindestens ein Kühlmittelkanal gebildet werden. Abhängig von einer Ausbildung des Stators kann das Gehäuse zudem rechteckig, rund, oval und dergleichen ausgebildet sein. Die Kühlflüssigkeit bzw. das Kühlmittel kann direkt zwischen Stator und Gehäuse entlangfließen. Der Kühlmittelkanal wird radial durch den Stator und das Gehäuse gebildet. Dadurch kann eine sehr kompakte Konstruktion des mindestens einen Kühlmittelkanals und auch des Elektromotors erreicht werden. Die Lamellen und das Gehäuse sind einfach herzustellen. Insbesondere können die Lamellen umfangsseitig ausgebildete, sich radial nach außen erstreckende Stege aufweisen. Hierfür können in bereits bestehende Lamellen umfangsseitige Aussparungen zum Bilden der Stege und der zwischen den Stegen und dem Gehäuse angeordneten Kühlmittelkanäle eingebracht werden. Es können somit durch geringfügige konstruktive Maßnahmen an der Lamellengeometrie Kühlmittelkanäle erstellt werden, wobei die meisten anderen Bestandteile des Elektromotors unverändert bleiben können.

Die Kühlflüssigkeit durchläuft dabei den Kühlmittelkanal benachbart zu den Lamellen und steht im direkten Kontakt mit dem Stator. Dadurch kann der Wärmeübergang optimiert werden. Durch fluiddichten Abschluss des Stators zu den Gehäusekappen wird verhindert, dass Kühlmittel zum Rotor gelangen kann, wodurch auch eine sichere Trennung des Kühlmittels gegenüber den Wicklungen des Stators gegeben ist.

Nach einer weiteren Ausführungsform weist der Stator zwei Distanzringe mit jeweils mindestens einem umfangsseitig angeordneten Steg auf, wobei die Lamellen des Stators zwischen den zwei Distanzringen angeordnet sind.

Der mindestens eine Distanzring weist mindestens einen Steg zum Ausbilden bzw. zum Fortführen des durch die Lamellen gebildeten Kühlmittelkanals auf. Im Außenbereich weist der mindestens eine Distanzring denselben Durchmesser wie die Lamellen auf. Mindestens zwei Distanzringe können im Gehäuse angeordnet und Teil des Stators sein. Der mindestens eine Distanzring dient als axiale Verlängerung der Lamellen und des mindestens einen Kühlmittelkanals. Die Stege des Distanzrings sind den Stegen der Lamellen nachgebildet und können diese axial verlängern.

Nach einer weiteren Ausführungsform sind die zwei Distanzringe axial zueinander verdreht angeordnet. Dabei ist jeweils ein Distanzring außen positioniert, während die Lamellen zwischen den zwei Distanzringen angeordnet sind. Die Ausrichtung der Lamellen kann nach einem Distanzring erfolgen. Der zweite Distanzring wird dazu axial verdreht angeordnet. Dadurch entsteht der Kühlkanal, welcher umfangsseitig mäanderförmig über die gesamte äußere Mantelfläche des Stators geführt werden kann. Hierdurch ist nur ein Einlass und nur ein Auslass notwendig. Der gesamte Stator kann entlang der äußeren Mantelfläche gekühlt werden. Die Distanzringe und die Gehäusedeckel dienen dabei als axiale Umlenkbereiche des Kühlmittelkanals.

Erfindungsgemäß weist der mindestens eine Steg der mindestens einen Lamelle mindestens eine Nut zum Aufnehmen eines Dichtmittels auf. Vorzugsweise ist ein Stegkopf mindestens eines Stegs ohne ein Dichtmittel angeordnet oder ist annähernd frei von dem Dichtmittel, da das Abstützmoment vom Elektromotor hier in das Gehäuse übertragen werden kann. Damit aber keine Kühlflüssigkeit über die Stegköpfe in den Stator eindringen kann, weisen die Stege der axial aneinandergereihten Lamellen längsseitig eine Dichtkante bzw. eine Nut zum Aufnehmen eines Dichtmittels auf. Um zwischen Gehäuse und Stator die Dichtkante ausreichend vorzuspannen, können geeignete Aussparungen an den Stegen positioniert sein. Somit kann der mindestens eine Kühlmittelkanal axial gegenüber dem Gehäuse abgedichtet werden, sodass ein Kühlmittelaustausch über die Stege hinweg unterbunden werden kann. Hierdurch kann eine Kühlmittelströmung kontrolliert durch den Stator geleitet werden.

Nach einer weiteren Ausführungsform weist mindestens ein umfangsseitig angeordneter Steg mindestens eines Distanzrings eine der mindestens einen Lamelle korrespondierende Nut zum Aufnehmen eines Dichtmittels auf. Das Dichtmittel kann somit über die Lamellen hinaus auf die Stege der Distanzringe aufgetragen werden, sodass der gesamte Kühlmittelkanal radial fluiddicht ausgeführt sein kann. Der Stator ist derart konstruiert, dass er in ein zweiteiliges Werkzeug eingelegt werden kann. Die Entformungsrichtung ist dabei axial. Dieses Werkzeug kann beispielsweise ein Vulkanisationswerkzeug sein. Bei dem Vorgang wird ein Dichtmittel im Außenbereich des Stators aufgetragen und dichtet den Kühlmittelkanal von einem Statorinnenbereich ab.

Nach einer weiteren Ausführungsform weist mindestens ein Distanzring mindestens eine axial angeordnete Nut zum Aufnehmen eines Dichtmittels auf. Die beiden Distanzringe weisen stirnseitig Aussparungen bzw. Nuten im Bereich des Distanzring-seitigen Kühlmittelkanalbodens auf. Beim Auftragen des Dichtmittels können sich diese Aussparungen mit dem Dichtmittel füllen und eine axiale Abdichtung zum Innenraum bzw. zum Rotor bilden. Im Bereich der Stege am Außendurchmesser setzen sich die axialen Dichtlippen an den Stirnseiten der Stege der Distanzringe fort.

Erfindungsgemäß ist mindestens ein Kühlmittelkanal zumindest bereichsweise mit dem Dichtmittel beschichtet. Die Beschichtung kann zwischen den Stegen des Stators und den Stegen der Distanzringe und dem Gehäuse verpresst und somit komplett fluiddicht ausgeführt sein. Hierdurch kann die Gefahr eines Lecks oder eines Eindringens des Kühlmittels zu den Wicklungen, beispielsweise durch altersbedingte Rußbildung zwischen den Lamellen, verhindert werden. Eine Beschichtung mit dem Dichtmittel kann dabei ein abschließender Bearbeitungsschritt des Stators sein, wodurch ein nachträgliches Lackieren oder Konservieren des Stators entfallen kann.

Nach einer weiteren Ausführungsform ist der mindestens eine Distanzring axial als ein Dichtmittel ausgebildet. Der Distanzring kann alternativ oder zusätzlich aus einem elastischen Kunststoff oder Silikon ausgebildet sein, sodass der Distanzring zwischen Gehäusekappe und Stator zusammengepresst werden und gleichzeitig als eine axiale Dichtung dienen kann. Hierdurch können zusätzliche Dichtmittel entfallen.

Nach einer weiteren Ausführungsform weist der Stator zumindest zwischen einer ersten und einer zweiten Lamelle und zwischen einer letzten und einer vorletzten Lamelle jeweils mindestens eine Dichtlamelle zum umfangsseitigen Aufnehmen des Dichtmittels auf. Die Dichtlamelle weist einen den Dichtmittelnuten der Stege der Lamellen korrespondierende radiale Ausdehnung auf. Bei der Montage des Stators können die Dichtlamellen und die Lamellen abwechselnd verbaut werden. Beim Beschichten mit einem Dichtmittel füllen sich die umlaufenden Dichtmittelnuten. Der Außenbereich bzw. die Stegköpfe der Lamellen bleiben dichtmittelfrei und können so die mechanischen Kräfte auf das Gehäuse übertragen. Durch ein abwechselndes Anbringen der Lamellen und Dichtungslamellen kann ein mäanderförmiger Verlauf der Dichtmittelkante entlang mindestens eines Stegs realisiert werden, welcher mechanisch beanspruchbar und haltbar sein kann.

Gemäß eines weiteren Ausführungsbeispiels weist das Gehäuse und/oder mindestens eine Gehäusekappe mindestens einen Kühlmittelzulauf und mindestens einen Kühlmittelauslauf auf. Hierdurch kann das Kühlmittel kontrolliert zum Kühlen des Stators in den Kühlmittelkanal hineingeleitet und herausgeleitet werden. Vorzugsweise wird das Kühlmittel erst hinausgeleitet, wenn die Kühlflüssigkeit um die gesamte Mantelfläche des Stators geführt wurde. Es können auch mehrere voneinander unabhängige Kühlmittelkanäle mit jeweils einem Kühlmittelzulauf und einem Kühlmittelauslauf vorhanden sein. Somit können thermisch besonders beanspruchte Bereiche des Stators mit einer höheren Wärmeentstehung gezielt gekühlt werden.

Die Erfindung ist anhand von Ausführungsformen in den Zeichnungen schematisch dargestellt und wird unter Bezugnahme auf die Zeichnungen weiter beschrieben. Es zeigt:
- Figur 1a: in einer Draufsicht eine Lamelle des Stators und einen Distanzring des Stators in einer erfindungsgemäßen Ausführungsform;
- Figur 1b: in einer Detailansicht einen Steg einer Lamelle in einer erfindungsgemäßen Ausführungsform;
- Figur 2: in einem Querschnitt einen erfindungsgemäßen Elektromotor;
- Figur 3: in einer schematischen Darstellung einen Ausschnitt einer umfangsseitigen Abwicklung des erfindungsgemäßen Stators;
- Figur 4: eine Schnittdarstellung eines erfindungsgemäßen Stators entlang der Schnittlinie A-A aus Figur 3 gemäß einer Ausführungsform;
- Figur 5: eine Schnittdarstellung eines erfindungsgemäßen Stators entlang der Schnittlinie A-A aus Figur 3 gemäß einer weiteren Ausführungsform.

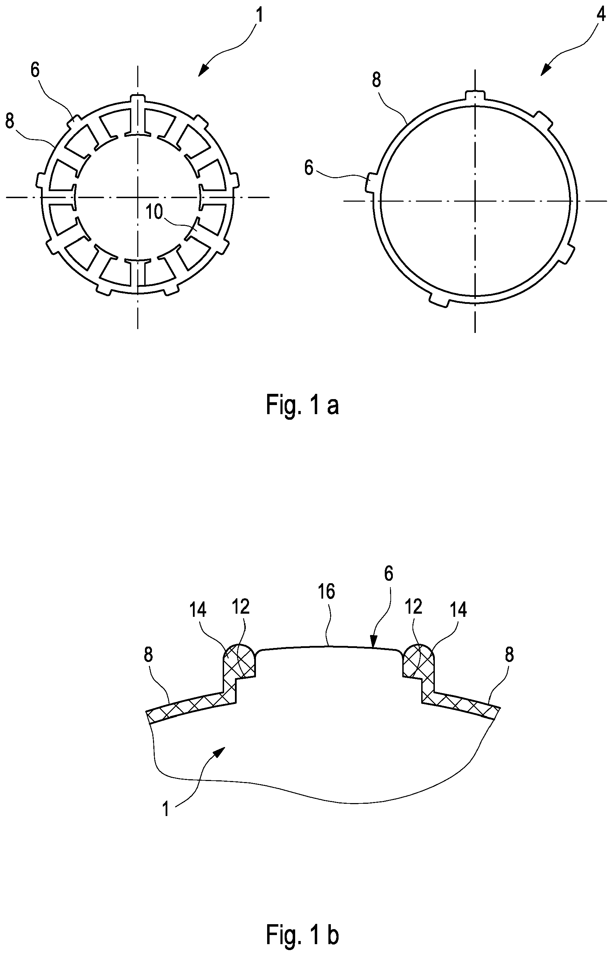

Figur 1a zeigt in einer Draufsicht eine Lamelle 1 des Stators 2 und einen Distanzring 4 des Stators 2 in einer erfindungsgemäßen Ausführungsform. Die Lamelle 1 und der Distanzring 4 weisen umfangsseitig angeordnete Stege 6 auf. Die Stege 6 beabstanden die Lamellen 1 und die Distanzringe 4 gegenüber einem Gehäuse und bilden somit Kühlmittelkanäle 8. Die Lamellen 1 weisen in einen Innenbereich gerichtete Statorzähne 10 zum Aufnehmen von Statorwicklungen auf.

Figur 1b veranschaulicht in einer Detailansicht einen Steg 6 einer Lamelle 1 in einer erfindungsgemäßen Ausführungsform. Insbesondere ist eine an Flanken des Stegs 6 angeordnete Nut 12 zum Aufnehmen eines Dichtmittels 14 gezeigt. Das Dichtmittel 14 ist gemäß dem Ausführungsbeispiel flächendeckend über den Kühlmittelkanal 8 verteilt bzw. dient als Beschichtung des Kühlmittelkanals 8. Ein Stegkopf 16 ist frei von einem Dichtmittel 14, sodass mechanische Kräfte des Stators 2 durch den Stegkopf 16 übertragen werden können.

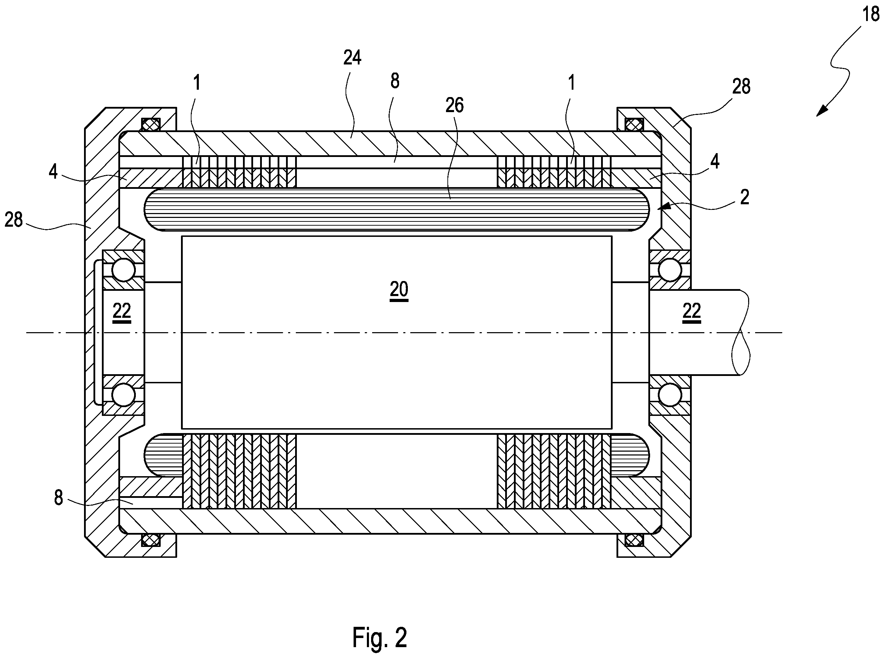

Figur 2 zeigt in einem Querschnitt einen erfindungsgemäßen Elektromotor 18 gemäß einer Ausführungsform. Der Elektromotor 18 weist einen im Innenbereich des Stators 2 angeordneten Rotor 20 mit einer Welle 22 auf. Der Stator 2 ist in einem rohrförmigen Gehäuse 24 angeordnet. Der Stator 2 besteht hier aus einer Vielzahl von Lamellen 1 und zwei axial die Lamellen 1 begrenzenden Distanzringen 4. Der Stator 2 weist im Bereich des Rotors 20 angeordnete axial verlaufende Statorwicklungen 26 auf. Das Gehäuse 24 ist axial beidseitig von jeweils einer Gehäusekappe 28 verschlossen. Die Gehäusekappen 28 weisen nicht bezifferte Lager zum Aufnehmen und zum Führen der Welle 22 des Rotors 20 auf. Die Kühlmittelkanäle 8 werden zwischen dem Gehäuse 24 und dem Stator 2 gebildet. Die Kühlmittelkanäle 8 werden axial durch die Gehäusekappen 28 gegenüber dem Rotor 20 und den Statorwicklungen 26 abgedichtet.

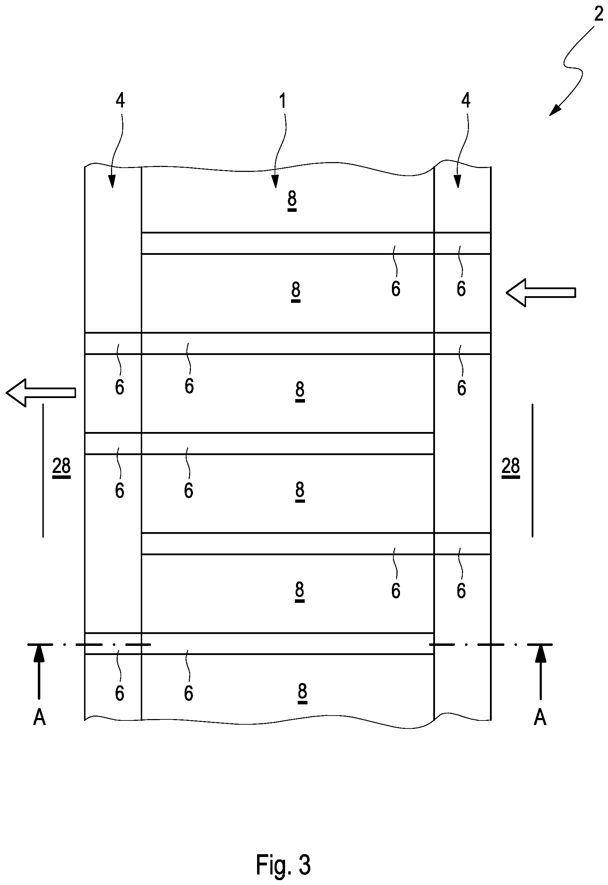

Figur 3 zeigt in einer schematischen Darstellung einen Ausschnitt einer umfangsseitigen Abwicklung des erfindungsgemäßen Stators 2. Es wird der Verlauf des Kühlmittelkanals 8 entlang des Stators 2 verdeutlicht. Die Distanzringe 4 sind axial zueinander verdreht angeordnet, sodass die Stege 6 einen mäanderförmigen Verlauf des Kühlmittelkanals 8 umfangsseitig entlang des Stators 2 ermöglichen. Die axial angeordneten Gehäusekappen 28 dienen als axiale Begrenzungen des Kühlmittelkanals 8. Die dicken Pfeile verdeutlichen einen Kühlmittelzulauf in den Kühlmittelkanal 8 hinein (rechter Pfeil) und einen Kühlmittelauslauf aus dem Kühlmittelkanal 8 hinaus (linker Pfeil).

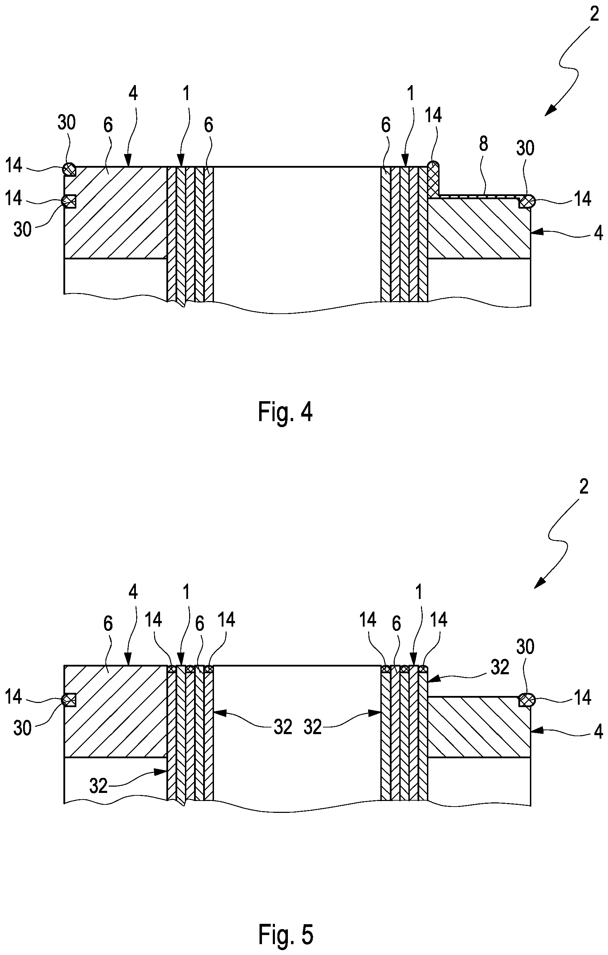

Figur 4 stellt eine Schnittdarstellung eines erfindungsgemäßen Stators 2 entlang der Schnittlinie A-A aus Figur 3 gemäß einer Ausführungsform dar. Die Figur 4 verdeutlicht insbesondere die Anordnung des Dichtmittels 14 im Bereich der Distanzringe 4. Die Distanzringe 4 weisen stirnseitig eingebrachte Vertiefungen 30 zum Aufnehmen des Dichtmittels 14 auf. Die Gehäusekappen 28 können mit den axial angeordneten Dichtmitteln 14 verbunden und den Kühlmittelkanal 8 axial fluiddicht abschließen.

Figur 5 zeigt eine Schnittdarstellung eines erfindungsgemäßen Stators 2 entlang der Schnittlinie A-A aus Figur 3 gemäß einer weiteren Ausführungsform. Der Stator 2 weist hierbei neben den Lamellen 1 Dichtungslamellen 32 auf. Die Dichtungslamellen 32 weisen einen geringeren Radius auf als die Lamellen 1 und können bei einem Befüllen der Nut 12 aus Figur 1b radial ebenfalls mit dem Dichtmittel 14 ausgefüllt werden. Insbesondere wird hierbei durch ein Anordnen einer Dichtungslamelle 32 zwischen zwei Lamellen 1 eine Nut zum Aufnehmen des Dichtmittels 14 ausgebildet.

### Bezugszeichenliste

- 1: Lamelle
- 2: Stator
- 4: Distanzring
- 6: Steg
- 8: Kühlmittelkanal
- 10: Statorzahn
- 12: Nut im Steg
- 14: Dichtmittel
- 16: Stegkopf
- 18: Elektromotor
- 20: Rotor
- 22: Welle des Rotors
- 24: Gehäuse
- 26: Statorwicklung
- 28: Gehäusekappe
- 30: axiale eingebrachte Nut / Vertiefung im Distanzring
- 32: Dichtungslamelle

## Patentansprüche

1. Elektromotor (18), insbesondere ein Innenläufermotor, mit einem aus einer Vielzahl von axial aneinandergereihten Lamellen (1) aufgebauten Stator (2), wobei der Stator (2) in Richtung eines im Stator (2) konzentrisch angeordneten Rotors (20) angeordnete Statorzähne (10) zum Aufnehmen von Statorwicklungen (26) aufweist, mit einem den Stator (2) radial umschließenden Gehäuse (24) und mit zwei Gehäusekappen (28) zum axial beidseitigen Verschließen des Gehäuses (24) und zum Aufnehmen und Führen einer Welle (22) des Rotors (20), wobei die Lamellen (1) jeweils mindestens drei umfangsseitig angeordnete Stege (6) zum Ausbilden von mindestens einem Kühlmittelkanal (8) zwischen dem Stator (2) und dem Gehäuse (24) aufweisen, und der mindestens eine Kühlmittelkanal (8) durch die Gehäusekappen (28) fluiddicht begrenzbar ist, **dadurch gekennzeichnet, dass** mindestens ein Steg (6) mindestens einer Lamelle (1) an seinen Flanken mindestens eine axial angeordnete Nut (12) zum Aufnehmen eines Dichtmittels (14) aufweist, damit keine Kühlflüssigkeit über die Stegköpfe in den Stator eindringen kann, wobei mindestens ein Kühlmittelkanal (8) zumindest bereichsweise mit dem Dichtmittel (14) beschichtet ist.

2. Elektromotor nach Anspruch 1, wobei der Stator (2) zwei Distanzringe (4) mit jeweils mindestens einem umfangsseitig angeordneten Steg (6) aufweist, wobei die Lamellen (1) des Stators (2) zwischen den zwei Distanzringen (4) angeordnet sind.

3. Elektromotor nach Anspruch 2, wobei die zwei Distanzringe (4) axial zueinander verdreht angeordnet sind.

4. Elektromotor nach Anspruch 2 oder 3, wobei mindestens ein umfangsseitig angeordneter Steg (6) mindestens eines Distanzrings (4) eine zu der mindestens einen Lamelle (1) korrespondierende Nut (12) zum Aufnehmen eines Dichtmittels (14) aufweist.

5. Elektromotor nach einem der Ansprüche 1 bis 4, wobei mindestens ein Distanzring (4) mindestens eine axial angeordnete Nut (30) zum Aufnehmen eines Dichtmittels (14) aufweist.

6. Elektromotor nach einem der Ansprüche 1 bis 5, wobei der mindestens eine Distanzring (4) axial als ein Dichtmittel ausgebildet ist.

7. Elektromotor nach einem der Ansprüche 1 bis 6, wobei der Stator (2) zumindest zwischen einer ersten und einer zweiten Lamelle (1) und zwischen einer letzten und einer vorletzten Lamelle (1) jeweils mindestens eine Dichtlamelle (32) zum umfangsseitigen Aufnehmen eines Dichtmittels aufweist.

8. Elektromotor nach einem der Ansprüche 1 bis 7, wobei das Gehäuse (24) und/oder die mindestens eine Gehäusekappe (28) mindestens einen Kühlmittelzulauf und mindestens einen Kühlmittelauslauf aufweisen.

## Claims

1. Electric motor (18), in particular an internal rotor motor, with a stator (2) constructed from a plurality of lamellae (1) that are arranged axially with respect to one another, wherein the stator (2) has stator teeth (10) that are arranged in the direction of a rotor (20), which is arranged concentrically in the stator (2), for accommodating stator windings (26), with a housing (24) that encloses the stator (2) radially, and with two housing caps (28) for axially closing the housing (24) on both sides and for accommodating and guiding a shaft (22) of the rotor (20), wherein the lamellae (1) each have at least three crosspieces (6) arranged circumferentially for creating at least one coolant channel (8) between the stator (2) and the housing (24), and the at least one coolant channel (8) can be delimited by the housing caps (28) in a fluid-tight manner, **characterised in that** at least one crosspiece (6) of at least one lamella (1) on its flanks has at least one axially arranged groove (12) for accommodating a sealing means (14), so that no cooling fluid can penetrate via the crosspiece heads into the stator, wherein at least one coolant channel (8) is coated at least partly with the sealing means (14).

2. Electric motor according to claim 1, wherein the stator (2) has two spacer rings (4), each of which has at least one crosspiece (6) arranged circumferentially, wherein the lamellae (1) of the stator (2) are arranged between the two spacer rings (4).

3. Electric motor according to claim 2, wherein the two spacer rings (4) are arranged axially rotated with respect to one other.

4. Electric motor according to claim 2 or 3, wherein at least one circumferentially arranged crosspiece (6) of at least one spacer ring (4) has a groove (12), corresponding to the at least one lamella (1), for accommodating a sealing means (14).

5. Electric motor according to any of claims 1 to 4, wherein at least one spacer ring (4) has at least one axially arranged groove (30) for accommodating a sealing means (14).

6. Electric motor according to any of claims 1 to 5, wherein the at least one spacer ring (4) is designed axially as a sealing means.

7. Electric motor according to any of claims 1 to 6, wherein, at least between a first lamella and a second lamella (1) and between a last lamella and a penultimate lamella (1) respectively, the stator (2) has at least one sealing lamella (32) for accommodating a sealing means on the circumferential side.

8. Electric motor according to any of claims 1 to 7, wherein the housing (24) and/or the at least one housing cap (28) have/has at least one coolant inlet and at least one coolant outlet.

## Revendications

1. Moteur électrique (18), en particulier un moteur à rotor interne, avec un stator (2) constitué d'une pluralité de lamelles (1) alignées entre elles axialement, dans lequel le stator (2) présente, dans la direction d'un rotor (20) disposé de manière concentrique dans le stator (2), des dents de stator (10) disposées pour recevoir des enroulements de stator (26), avec une carcasse (24) entourant radialement le stator (2) et avec deux capots de carcasse (28) pour fermer axialement la carcasse (24) des deux côtés et pour recevoir et guider un arbre (22) du rotor (20), dans lequel les lamelles (1) présentent respectivement au moins trois traverses (6) disposées à la périphérie pour former au moins un canal d'agent refroidisseur (8) entre le stator (2) et la carcasse (24), et le au moins un canal d'agent refroidisseur (8) peut être limité par les capots de carcasse (28) de manière étanche au fluide, **caractérisé en ce qu'**au moins une traverse (6) d'au moins une lamelle (1) présente à ses flancs au moins une rainure (12) disposée axialement pour recevoir un moyen d'étanchéité (14), de façon qu'aucun liquide de refroidissement ne puisse pénétrer dans le stator par les têtes de traverse, dans lequel au moins un canal d'agent refroidisseur (8) est revêtu du moyen d'étanchéité (14) au moins par zones.

2. Moteur électrique selon la revendication 1, dans lequel le stator (2) présente deux bagues d'espacement (4) avec respectivement au moins une traverse (6) disposée à la périphérie, dans lequel les lamelles (1) du stator (2) sont disposées entre les deux bagues d'espacement (4).

3. Moteur électrique selon la revendication 2, dans lequel les deux bagues d'espacement (4) sont disposées axialement tournées l'une par rapport à l'autre.

4. Moteur électrique selon la revendication 2 ou 3, dans lequel au moins une traverse (6) disposée à la périphérie, d'au moins une bague d'espacement (4), présente une rainure (12) correspondant à la au moins une lamelle (1) pour recevoir un moyen d'étanchéité (14).

5. Moteur électrique selon l'une quelconque des revendications 1 à 4, dans lequel au moins une bague d'espacement (4) présente au moins une rainure (30) disposée axialement pour recevoir un moyen d'étanchéité (14).

6. Moteur électrique selon l'une quelconque des revendications 1 à 5, dans lequel la au moins une bague d'étanchéité (4) est formée axialement comme un moyen d'étanchéité.

7. Moteur électrique selon l'une quelconque des revendications 1 à 6, dans lequel le stator (2) présente, au moins entre une première et une deuxième lamelle (1) et entre une dernière et une avant-dernière lamelle (1), respectivement au moins une lamelle d'étanchéité (32) pour recevoir un moyen d'étanchéité à la périphérie.

8. Moteur électrique selon l'une quelconque des revendications 1 à 7, dans lequel la carcasse (24) et/ou le au moins un capot de carcasse (28) présentent au moins une entrée d'agent refroidissant et au moins une sortie d'agent refroidissant.
